(19) Europäisches Patentamt
European Patent Office
Office européen des brevets

(11) **EP 1 016 274 B1**

(12) **EUROPÄISCHE PATENTSCHRIFT**

(45) Veröffentlichungstag und Bekanntmachung des Hinweises auf die Patenterteilung:
**28.05.2008 Patentblatt 2008/22**

(51) Int Cl.:
*H04N 5/74* *(2006.01)*     *H04N 9/31* *(2006.01)*
*G02B 27/18* *(2006.01)*

(21) Anmeldenummer: **99929156.0**

(22) Anmeldetag: **08.06.1999**

(86) Internationale Anmeldenummer:
**PCT/EP1999/003961**

(87) Internationale Veröffentlichungsnummer:
**WO 2000/004710 (27.01.2000 Gazette 2000/04)**

(54) **ANORDNUNG, BEI DER VON EINER LICHTQUELLE AUS LICHT AUF EINE FLÄCHE GERICHTET WIRD**

SYSTEM IN WHICH LIGHT IS DIRECTED FROM A LIGHT SOURCE ONTO A SURFACE

DISPOSITIF DANS LEQUEL UNE LUMIERE EST DIRIGEE SUR UNE SURFACE A PARTIR D'UNE SOURCE LUMINEUSE

(84) Benannte Vertragsstaaten:
**DE FR GB NL**

(30) Priorität: **17.07.1998 DE 19832317**

(43) Veröffentlichungstag der Anmeldung:
**05.07.2000 Patentblatt 2000/27**

(60) Teilanmeldung:
**08006357.1**

(73) Patentinhaber: **CARL ZEISS JENA GmbH**
**07745 Jena (DE)**

(72) Erfinder: **PIEHLER, Eberhard**
**D-07778 Nerkewitz (DE)**

(74) Vertreter: **Kunz, Herbert**
**HAMMONDS**
**Karl-Scharnagl-Ring 7**
**80539 München (DE)**

(56) Entgegenhaltungen:
**EP-A- 0 436 738**     **DE-U- 8 217 720**
**US-A- 5 184 253**     **US-A- 5 564 811**
**US-A- 5 633 755**

- **PATENT ABSTRACTS OF JAPAN vol. 018, no. 253 (P-1737), 13. Mai 1994 (1994-05-13) & JP 06 034931 A (HITACHI LTD), 10. Februar 1994 (1994-02-10)**

**EP 1 016 274 B1**

## Beschreibung

Die Erfindung bezieht sich auf eine Anordnung, beider von einer Lichtquelle aus Licht mittels einer ersten Optik auf eine Fläche gerichtet wird, aufgrund der ein Bild entsteht, das mittels einer zweiten Optik erfaßbar ist.

Anordnungen, bei denen Licht aus einer Lichtquelle zur Beleuchtung auf ein Objekt gerichtet wird, um beispielsweise ein Bild durch eine zweiten Optik betrachten zu können, sind beispielsweise aus der Mikroskopie bekannt. Weiter sind Dia- oder Filmprojektoren gebräuchlich, bei denen ein von einer Lichtquelle stammendes Lichtbündel mit Hilfe eines Kondensors zum gleichmäßigen Ausleuchten auf ein Dia oder Filmbild geworfen wird, das dann anschließend mit einem Objektiv als zweiter Optik auf einem Schirm dargestellt wird.

Insbesondere sei hier aber eine neuere Technik angesprochen, bei -der mit Hilfe von Kippspiegelmatrixen Videobilder erzeugt werden. Diese Kippspiegelmatrixen bestehen aus einem Feld von einzelnen Kippspiegeln, die zwei Zustände, Null und Eins, je nach eingestellter Reflexionsrichtung annehmen können. Die Anzahl der Reihen und Spalten des Feldes entsprechen der Videonorm für Zeilen und Bildpunkten/Zeile des darzustellenden Videobildes. Um auch Grauwerte bzw. Farben einzelner Bildpunkte zu ermöglichen, wenden die diesen zugeordneten Bildspiegel je nach Bildpunktinformation mit einem Pulszug beaufschlagt, der diese Kippspiegel schnell zwischen Reflexion in eine der beiden Richtungen und Reflexion in die andere Richtung hin- und herschaltet, so daß im Zeitmittel durch das Tastverhältnis zwischen den Zuständen Null und Eins ein entsprechender Zwischenwert zwischen Hell und Dunkel eingestellt wird. Derartige Kippspiegelmatrixen sind beispielsweise von der Firma Texas Instruments erhältlich.

Die beim Einsatz derartiger Kippspiegelmatrixen eingesetzten Optikenbestehen, wie bei-den genannten bekannten Projektoren, einmal aus einer Optik zur Beleuchtung der Kippspiegelmatrix und einer zweiten Optik, die dabei üblicherweise als Objektiv bezeichnet wird, zur Projektion des Bildinhaltes auf einen Bildschirm, wobei sowohl Vorder- als auch Rückprojektionen möglich sind.

Der Begriff des Bildschirms ist hier sehr weit zu verstehen. Insbesondere für Showanwendungen werden hier als Bildschirm beispielsweise auch der Dampf aus einer Nebelmaschine oder eine Wasserwand verstanden.

Aufgrund von Platzproblemen bei der Beleuchtung wurden als erste Optik und zweite Optik bisher Optiken mit langer Schnittweite eingesetzt, so daß für diese Projektoren mit Kippspiegeln immer eine bestimmte Größe erforderlich war. Wegen der langen Lichtstrecken sind außerdem Lichtverluste möglich, aufgrund welcher der Eingangsleistungsbedarf und damit auch die abzuführende Wärmeleistung erhöht ist, was ebenfalls wieder eine vergrößerte Bauform bedingt. Bei kleineren Projektoren und damit auch gewünschter verringerter Wärmeleistungen ist deshalb ein Bild großer Bildschirmdiagonale überhaupt nicht mehr möglich.

Kleine und lichtstarke Projektoren sind jedoch von großem Interesse. Sie sollten transportierbar sein und bei normaler Zimmerbeleuchtung ein ausreichend helles Bild geeigneter Größe erzeugen. Es wird schon jetzt angestrebt, die gerade auf den Markt kommenden portablen Projektoren durch eine nächste, bedeutende kleinere Projektorgeneration, sogenannten Palm-Top-Projektoren, zu ersetzen. Für diese Projektoren werden wesentlich kleinere optische Systeme sowohl für die Beleuchtungsoptik als auch für das Projektionsobjektiv benötigt. Man könnte versuchen, dies durch Miniaturisierung der bekannten Optiken zu erreichen, wobei aber das Wärmeproblem und der deswegen zusätzliche Kühlaufwand immer eine untere Grenze bestimmen würden. Außerdem müssen die Kippspiegelmatrixen immer eine gewisse Größe haben, um genügend viel Licht reflektieren zu können.

Eine ähnliche Problematik ergibt sich auch bei reflektiven LCD's, insbesondere solchen mit gekippten LCD Elementen.

Aufgabe der Erfindung ist es, eine neue Anordnung zur Beleuchtung und zur Projektion zu finden, die es gestattet, derartige miniaturisierte Projektoren zu realisieren.

Die aufgrund der oben genannten Forderungen zunächst unlösbar erscheinende Aufgabe wird ausgehend vom eingangs genannten Stand der Technik durch Aufgliederung der ersten und zweiten Optik in eine erste, zweite und dritte Teiloptik gelöst, wobei die erste und zweite Teiloptik jeweils eine gemeinsame optische Achse haben und die zweite Optik bilden. Das Licht zur Beleuchtung fällt von der dritten Teiloptik aus ein und die dritte Teiloptik sowie die zweite Teiloptik bilden dabei die erste Optik. Um eine Projektion zu ermöglichen, schließt das von der dritten Teiloptik kommende und in die zweite Teiloptik einfallende Licht einen Winkel zur gemeinsamen optischen Achse ein, bei der die dritte Teiloptik außerhalb eines Bereichs liegt, der von dem von der Fläche reflektierten Licht von der zweiten zur ersten Teiloptik durchlaufen wird.

Daß eine derartige Aufteilung in erste, zweite und dritte Teiloptik möglich ist, ist zunächst unerwartet, da der bisherige Stand der Technik aufgrund der vorgesehenen langen Schnittweiten sowohl für die Beleuchtung der beispielhaft genannten Kippspiegelmatrix als auch für die Abbildung von dessen Bildinhalt kleine Aperturen verlangt, was erfahrungsgemäß dazu führt, daß sich die Strahlengänge des Beleuchtungslichtes und des zurückgeworfenen Lichtes dann überlappen müssen. Aufgrund der üblicherweise verwendeten kleinen Aperturwinkel wäre es grundsätzlich nicht möglich, die Lichtwege von dem auf die Kippspiegelmatrix einfallenden Lichtbündel durch Teiloptiken von demjenigen des von der Kippspiegelmatrix reflektierten Lichtes zu entkoppeln. Erst mit der erfindungsgemäßen Anordnung wird es möglich, die Teiloptiken mit entsprechend kurzen Schnittweiten zu realisieren, wodurch die verwendbaren Aperturen geeignet groß genug gewählt werden können und ein genügend großer Weg für die dritte Teiloptik freigehalten wird, damit das von der Kippspiegelmatrix ausfallende Licht ungehindert durchgelassen wird. Die spezielle Auslegung solcher Optiken ist dem Fachmann bekannt.

Diese Lösung weicht stark von den üblichen Lösungswegen zur Miniaturisierung bekannter Einrichtungen ab. Insbesondere wäre zu erwarten gewesen, daß der Fachmann nach Erkennen des bei Miniaturisierung auftretenden Wärmeproblems einen wesentlichen Teil seiner Gedanken auf die Realisierung einer besonders platzsparenden Kühlung gelegt hätte.

Eine geeignete Kühlung stellt aber bei der erfindungsgemäßen Anordnung im Allgemeinen kein Problem dar, da die wesentlichen wärmeerzeugenden Elemente, die Kippspiegelmatrix sowie die Lichtquelle, außerhalb der drei Teiloptiken liegen. Die Rückseite dieser Elemente bleibt dabei völlig frei, so daß für die Kühlung im Gegensatz zu bekannten Anordnungen kein besonderes Augenmerk auf denjenigen Platz gerichtet werden muß, der eventuell für optische Elemente freizuhalten ist. Dadurch kann auch eine kompakte, effiziente Kühlung für die Kippspiegelmatrix eingesetzt werden.

Unerwarteterweise hat sich gezeigt, daß man mit der erfindungsgemäßen Anordnung auch eine vergrößerte Lichtstärke erreicht. Dies wird darauf zurückgeführt, daß der Abstand der Kippspiegelmatrix zur Optik aufgrund der kleineren Schnittweiten zur Beleuchtung und zum Sammeln des von der Kippspiegelmatrix stammenden, dann zu projizierenden Lichts demgemäß wesentlich geringer als beim Stand der Technik gehalten werden kann, so daß weniger Lichtverluste eintreten.

Die dritte Teiloptik läßt sich nämlich in Bezug auf die optische Achse prinzipiell zwischen die erste und zweite Teiloptik einfügen. Eine noch größere Kompaktheit wird aber gemäß einer vorteilhaften Weiterbildung der Erfindung erreicht, bei der eine optische Achse der dritten Teiloptik mit der optischen Achse der zweiten Teiloptik einen Winkel $\leq$ 90° einschließt und bei der eine Einrichtung zum Umlenken des Lichtbündels, insbesondere ein Spiegel oder ein Prisma, vorgesehen ist, mit dem das von der dritten Teiloptik ausgehende Licht in die zweite Teiloptik eingeleitet wird. Mit Hilfe des Spiegels oder Prismas, die wesentlich weniger Platz wegnehmen als üblicherweise eine Linsenoptik, wie beispielsweise die dritte Teiloptik, läßt sich die Kompaktheit weiter steigern. Außerdem sorgt der Spiegel oder das Prisma, insbesondere unter dem angegebenen Winkel von kleiner gleich 90°, auch für eine Verlängerung des Lichtwegs für das Beleuchtungslicht, mit dem sich eine bessere Fokussierbarkeit und Gleichmäßigkeit der Ausleuchtung einer beispielhaft genannten Kippspiegelmatrix erreichen läßt. Mit diesem verlängertem Weg lassen sich auch die schon als besonders günstig beschriebenen Aperturen für die Beleuchtung verwirklichen.

Ein Prisma kann im Gegensatz zum Spiegel so ausgelegt werden, daß Lichtbündel verschiedener Farben getrennt werden, die dann nach dieser Aufspaltung auf unterschiedliche Kippspiegelmatrixen gerichtet werden, auf denen dann zur Darstellung von Farbbildem verschiedene Farbauszüge eingestellt werden. Dies erbringt gegenüber anderen Lösungen, beispielsweise mit einem Farbrad, eine insgesamt höhere Lichtleistung bezüglich der eingespeisten elektrischen Leistung.

Prinzipiell ließe sich die Einrichtung zum Umlenken des Lichtbündels an jedem beliebigen Ort zwischen erster und zweiter Teiloptik einbringen. Dagegen ist es allerdings sowohl optisch günstiger als auch zur Verringerung des Raumbedarfes vorteilhafter, wie auch noch aus einem nachfolgend beschriebenen Ausführungsbeispiel deutlicher werden wird, wenn die Einrichtung zum Umlenken von dieser Pupillenfläche der zweiten Optik nicht mehr als der halbe Pupillendurchmesser beabstandet ist. Die Pupillenfläche der zweiten Optik ist hier diejenige von der zweiten Teiloptik bestimmte Fläche, die durch die Punkte ausgebildet ist, in denen von der reflektierenden Fläche ausgehende Lichtstrahlen gleichen Winkels aber unterschiedlichem Reflexionsort gesammelt werden.

Aufgrund des der Erfindung zugrundeliegenden Prinzips kann die dritte Teiloptik beispielsweise so ausgestaltet sein, daß eine auf einen Punkt fokussierte Lichtquelle durch diese Teiloptik wieder auf den Punkt der beispielhaft genannten Kippspiegelmatrix abgebildet wird. Wesentlich weniger aufwendig hat es sich aber bezüglich der Gleichmäßigkeit der Abbildung gezeigt, wenn die dritte Teiloptik fokussierend ausgebildet ist, also einen parallelen Strahl in einen Punkt überführt. Dann kann eingangsseitig der zweiten Teiloptik von einem parallelen Strahl ausgegangen werden, der anschließend zur Abbildung auf die Kippspiegelmatrix fokussiert wird. Zur Führung des Lichts auf der Eingangsseite der zweiten Teiloptik ist in diesem Fall zwar allgemein mehr Platz für die dritte Teiloptik nötig, um den parallelen Lichtstrahl zu erzeugen, die Gleichmäßigkeit der Beleuchtung wird aber wesentlich erhöht. Ein größerer Platzbedarf ist bei Einsatz der vorgenannten Einrichtung zum Umlenken des Strahlenganges dann auch nicht erforderlich.

Wie vorstehend schon deutlich wurde, besteht ein wesentlicher Vorteil der Erfindung in der besonderen Möglichkeit, Aperturen sowohl zur Abbildung als auch zur Beleuchtung zu optimieren. Insbesondere haben sich die folgenden Weiterbildungen der Erfindung als besonders vorteilhaft herausgestellt, bei denen die zweite Teiloptik auf der Seite der reflektierenden Fläche eine Apertur von größer als 0,3 und insbesondere 0,5 aufweist und die dritte Teiloptik für einen Beleuchtungswinkel $\theta$ auf der reflektierten Fläche hinter der zweiten Teiloptik mit $\sin \theta$ kleiner als 0,3 und insbesondere kleiner als 0,2 ausgelegt ist. Mit Erhöhung der Apertur ist ein kleinerer Abstand zwischen der beispielhaft als Kippspiegelmatrix genannten reflektierenden Fläche möglich als es aus dem Stand der Technik bekannt ist. Aufgrund dieser günstigen Apertur zur Beleuchtung ist auf einfache Weise gewährleistet, daß das von der Kippspiegelmatrix ausgehende Licht ungehindert von der Beleuchtungsoptik auf einen Schirm projiziert werden kann.

Die oben näher angegebenen Merkmale erwiesen sich insbesondere als vorteilhaft, wenn die reflektierende Fläche ein rechteckiges bilderzeugendes Element, insbesondere eine Kippspiegelmatrix oder eine reflektierende LCD, ist und das in die dritte Teiloptik einfallende Lichtbündel ein dieser im Seitenverhältnis angepaßtes rechteckiges Stahlprofil aufweist.

Der Vorteil des Einsatzes der erfindungsgemäßen Anordnung bei einer Kippspiegelmatrix wurde vorstehend schon deutlich gemacht. Dadurch, daß das Lichtbündel ein deren Seitenverhältnis angepaßtes rechteckiges Strahlprofil aufweist, wird es möglich, daß das zur Beleuchtung eingesetzte Licht nahezu vollständig auf die Kippspiegelmatrix gebracht wird, wodurch dann auf dem Bild eine maximale Leuchtstärke erzeugt wird.

Eine möglichst gleichmäßige Beleuchtung ist bei Kippspiegelmatrixen ebenfalls von Vorteil. Um dabei optische Elemente einsparen zu können, ist gemäß einer vorteilhaften Weiterbildung der Erfindung ein Mischstab zur Erzeugung des rechteckigen Strahlprofils vor der dritten Teiloptik vorgesehen. Ein Mischstab mischt das von einer Lichtquelle ausgehende Licht über Vielfachreflexionen. Man kann dazu beispielsweise einen prismenförmigen Stab mit rechteckiger Eingangs- und Ausgangsfläche einsetzen, wobei beim Durchgang des Lichtes von der Lichtquelle an der Mantelfläche mehrfach Totalreflexion erfolgt, so daß der Ort auf der Grundfläche des prismenförmigen Mischstabes, aus der das Licht ausfällt, praktisch unabhängig vom Einfallsort wird. Dadurch wird ein gleichmäßig beleuchtetes rechteckiges Feld erzeugt, das auf die Kippspiegelmatrix abgebildet wird.

Auch diesen Mischstab könnte man prinzipiell vor oder hinter der dritten Teiloptik anordnen. Zum Fördern der Kompaktheit hat es sich aber als äußerst günstig erwiesen, wenn der Mischstab zwischen Beleuchtungseinrichtung und der dritten Teiloptik vorgesehen ist.

Zur Darstellung von Farbbildern wird bei dieser Kippspiegelmatrixtechnik, wenn nur eine einzige Matrix eingesetzt wird, üblicherweise ein Farbrad vorgesehen. Ein diesbezüglich aus dem Stand der Technik bekanntes Farbrad ist eine Kreisscheibe, die an ihrem Umfang mehrere Sektoren mit unterschiedlichen Farbfiltern aufweist. Dieses Farbrad wird zur Erzeugung eines Farbbildes schnell gedreht, wodurch das Licht sequentiell bezüglich unterschiedlicher Farben gefiltert wird.

Der Informationsgehalt auf der Kippspiegelmatrix wird ferner mit den jeweiligen Farben der einzelnen Farbfilter, die das Licht zum Beleuchten der Matrix durchläuft, synchronisiert. Aufgrund der Trägheit des Auges und der angepaßten Rotationsgeschwindigkeit des Farbrads werden die unterschiedlichen Farben gleichzeitig wahrgenommen und die verschiedenen auf der Kippspiegelmatrix sequentiell eingestellten Farbauszüge als einziges farbiges Videobild erfaßt.

Gemäß einer vorteilhaften Weiterbildung wird jedoch von dieser Konstruktion abgewichen, indem zur Darstellung von Farbbildem eine einzige Kippspiegelmatfix sowie ein Farbrad vorgesehen ist, wobei das Farbrad als eine in Sektoren mit Filtern unterschiedlicher Farben unterteilte, die Eingangs- und/oder Ausgangsfläche, des Mischstabs abdeckende Mantelfläche eines Zylinders ist. Auf diese Weise wird eine besonders kompakte Anordnung erreicht, da aufgrund der zylindrischen Ausführung gegenüber der bekannten Kreisscheibe nur eine einzige Dimension senkrecht zur Längenausdehnung des Mischstabes für das Farbrad benutzt wird. Dies wird später anhand der Figuren noch besser verdeutlicht.

Üblicherweise bedarf es bei derartigen Optiken gemäß dem Stand der Technik eines erhöhten Aufwands zur Justierung, um die entsprechenden Achsen aufeinander abzustimmen. Hier hat es sich aber gemäß einer bevorzugten Weiterbildung der Erfindung als vorteilhaft herausgestellt, daß als ein Element für eine Justierung eine Einstellbarkeit der Kippspiegelmatrix in Position und/oder Winkelstellung ermöglicht wird.

Eine Korrekturmöglichkeit für Winkel und Abstand ist ausreichend, um sowohl die Beleuchtungsrichtung als auch den Lichtdurchgang durch die erste und zweite Teiloptik optimal einzustellen.

Die Erfindung wird nachfolgend anhand von Ausführungsbeispielen in Verbindung mit der beigefügten Zeichnung noch näher erläutert. Es zeigen:

Fig. 1    eine schematische Darstellung einer Anordnung zur Erläuterung des bei der Erfindung eingesetzten Prinzips;

Fig. 2    eine besonders vorteilhafte Ausgestaltung der Erfindung zur Beleuchtung einer DMD-Matrix und

Fig. 3    einen Linsenschnitt von dem Beispiel gemäß Fig. 2 zur detaillierten Erläuterung der eingesetzten Optik

Im folgenden ist das der Erfindung zugrunde liegende Prinzip, ohne daß dies die Allgemeinheit beschränken soll, bei einem Projektor mit Kippspiegelmatrixen ausgeführt. Die erfindungsgemäße Anordnung kann auch bei anderen Beleuchtungen, beispielsweise bei Mikroskopen oder Episkopen, vorteilhaft eingesetzt werden.

Auf einer optischen Achse 20 ist eine erste Teiloptik 22 und eine zweite Teiloptik 24 angeordnet, die zusammen eine Projektionsoptik bilden, mit der ein auf einer reflektierenden Fläche 25 dargestelltes Bild auf einem Projektionsschirm dargestellt wird. Die reflektierende Fläche 25 war dabei durch eine digitale Kippspiegelmatrix (DMD-Matrix) ausgebildet, wie sie schon eingangs beschrieben wurde. Wenn statt einer einzigen DMD-Matrix allerdings drei für die verschiedenen Farbauszüge verwendet werden sollen, kann optional noch ein Prisma 26 eingesetzt werden, mit dem das Beleuchtungslicht in Lichtbündel dreier verschiedener Farben aufgespalten wird, die dann auf drei verschiedene unter Winkel angeordneten OMD-Matrixen gerichtet werden.

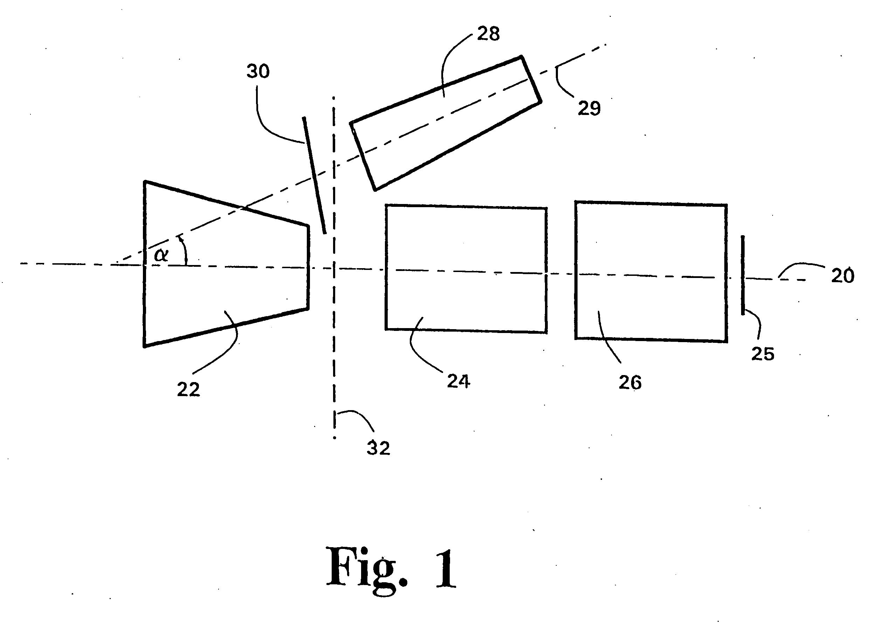

Statt eine separate Beleuchtungsoptik, wie es aus dem Stand der Technik bekannt ist, zur Beleuchtung auf die reflektierende Fläche 25 zu richten, wird hier vorgeschlagen, die zweite Teiloptik 24 auch zugleich zur Beleuchtung zu verwenden und das dazu vorgesehene Licht über eine dritte Teiloptik 28 und eine Einrichtung zum Umlenken in die zweite Teiloptik 24 zu lenken. Im Beispiel von Fig. 1 ist ein Spiegel 30 als Einrichtung zum Umlenken gezeigt.

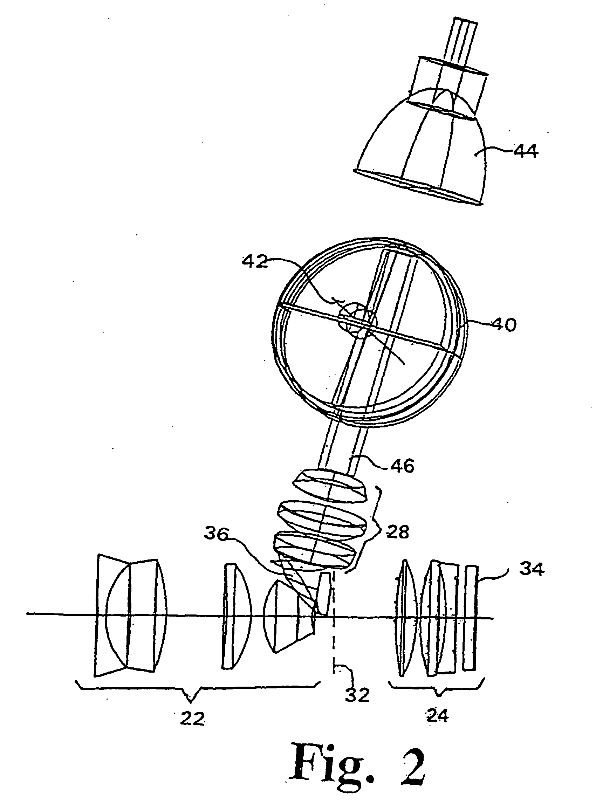

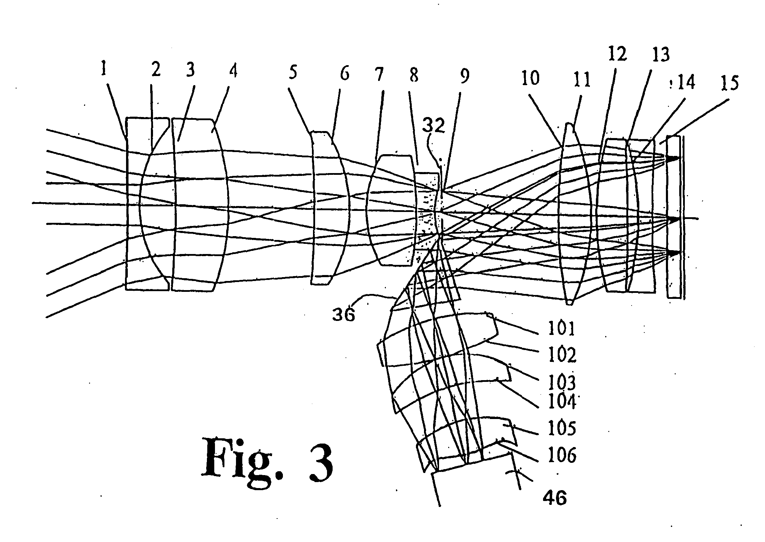

Die dritte Teiloptik 28 liegt mit ihrer optischen Achse 29 außerhalb der optischen Achse 20, die dadurch unter einem Winkel α zur optischen Achse 20 der ersten Teiloptik 22 und zweiten Teiloptik 24 liegt. Dieser Winkel α sollte ≤ 90° sein. Insbesondere haben sich auch sehr steile Winkel α zwischen 60° und 90° als günstig erwiesen, wie es beispielsweise in den Fig. 2 und Fig. 3 besser erkennbar dargestellt ist.

Im Gegensatz zum Stand der Technik erreicht man hier wesentlich kleinere Schnittweiten, weil die zweite Teiloptik 24 auch als Teiloptik zum Projizieren verwendet wird. Deswegen kann man die reflektierende Fläche 25 wesentlich näher an die zweite Teiloptik 24 heranbringen. Die Fokussierbarkeit wird verbessert, so daß auch mehr Licht zur Projektion zur Verfügung steht als es aus dem Stand der Technik bekannt ist.

Die dadurch ebenfalls ermöglichten günstigen Aperturwerte für das Licht zur Beleuchtung und das zum Projizieren gesammelte Licht lassen es weiterhin zu, daß die reflektierende Fläche 25 näher an die zweite Teiloptik geführt werden kann.

Die Aperturen der gesamten Optik, wie aus den nachfolgenden Figuren noch verständlicher wird, sind so ausgelegt, daß das zu projizierende Licht außerhalb eines Bereiches durch die Optiken 24 und 26 verläuft, in dem das Beleuchtungslicht auf die reflektierende Fläche 25 gerichtet ist. Das bedeutet, der Spiegel 30 zum Einkoppeln stört das Licht der Projektion nicht, weil er nicht in dessen Strahlengang liegt, daher kann das gesamte von der reflektierenden Fläche 25 stammende Licht zur Projektion eingesetzt werden.

Für eine derartige Ausgestaltung hat es sich insbesondere als günstig erwiesen, wenn die zweite Teiloptik 24 eine fokussierende Optik ist, die das von der reflektierenden Fläche 25 reflektierte Licht in die Pupillenebene 32 der zweiten Optik überführt, die auch die Pupillenebene der ersten Optik ist, von der aus dann die erste Teiloptik 22 das Bild auf die Projektionswand projiziert.

Außerdem wird auch das von der dritten Teiloptik 28 ausgehende Licht auf die Pupillenfläche 32 projiziert. Dafür hat es sich optisch als besonders vorteilhaft erwiesen, wenn der Spiegel 30, wie in Fig. 1 gezeigt, zwischen der Pupillenfläche 32 und der ersten Teiloptik liegt.

In Fig. 2 ist ein Ausführungsbeispiel gezeigt, bei dem aber kein Farbteilerprisma 26 eingesetzt wird, weil hier nur eine einzige DMD-Matrix 34 verwendet wird. Die DMD-Matrix 34 ist dabei bezüglich Winkel und Position einstellbar, um sie optisch justieren zu können. Die Teiloptiken 22, 24 und 28 sind in Fig. 2 ferner detaillierter als Linsengruppen angegeben. Allerdings ist statt des Spiegels 30 im Gegensatz zum Ausführungsbeispiel von Fig. 1 beispielhaft ein Prismensystem 36 gezeigt.

Man kann zur farbigen Bilddarstellung mit einer einzigen Kippspiegelmatrix jedoch auch ein Farbrad verwenden. In Fig. 2 ist dazu ein spezielles Farbrad 40 gezeigt. Dieses Farbrad ist im Gegensatz zum Stand der Technik keine Scheibe, dagegen ist es als Mantelfläche eines Zylinders ausgebildet, wobei dessen Zylinderlänge nur etwa die Größe des Lichtbündels vor der dritten Teiloptik 28 aufweisen muß. Dadurch wird gegenüber der Scheibe Platz gespart.

Diese Mantelfläche ist mit unterschiedlichen Farbfiltern versehen, die im Ausführungsbeispiel mit Hilfe dielektrischer Schichten ausgebildet wurden. Dieses Farbrad 40 wird schneller als mit 1/10 Umdrehungen pro Sekunde um seine Rotationsachse 42 gedreht, so daß ein Beobachter aufgrund der Trägheit des Auges die durch die vorgesehenen Farbfilter auf der Mantelfläche hervorgerufenen Farben scheinbar simultan wahrnimmt. Der Bildinhalt auf der DMD-Matrix 34 wird dabei synchron zu diesen Farben eingestellt. Das Auge eines Beobachters erfährt so ein über die Teiloptik 22 projiziertes Farbbild.

Um die DMD-Matrix 34 möglichst gleichmäßig zu beleuchten, ist weiter ein Mischstab 46 vorgesehen. Dieser ist als Glasstab ausgebildet, an dessen Mantel Totalreflexion stattfindet. Durch die mehrfache Totalreflexion an den Seiten geht die Information des Ursprungs der Lichtemission verloren, so daß sich am Ende des Mischstabs 46 ein gleichmäßig beleuchtetes rechteckiges Feld ergibt. Dieses gleichmäßig beleuchtete rechteckige Feld wird über die dritte Teiloptik 28 und die zweite Teiloptik 24 auf die DMD-Matrix gerichtet. Hier ist insbesondere ein rechteckiger Mischstab 46 vorteilhaft, der bezüglich seines Seitenverhältnisses der Austrittsfläche den Abmessungen der DMD-Matrix 34 angepaßt ist, um für deren Beleuchtung möglichst wenig Primärlicht aus der Lampe 44 zu verlieren.

Die Strahlengänge durch die einzelnen Linsen einer beispielhaft angegebenen Optik sind im einzelnen aus Fig. 3 erkennbar. Die Linsenkrümmungen dieser Optik sind außerdem noch detailliert in der im Anhang beigefügten Tabelle I angegeben. Dabei bezieht sich die angegebene Flächennummer auf das jeweilige Bezugszeichen in Fig. 3, D ist der Abstand zwischen den Flächen, N der Brechungsindex und v die Abbesche Zahl, gemäß der üblichen Definitionen zur Charakterisierung des Dispersionsverhaltens. Die Flächennummer 9 bezieht sich dabei auf die Zwischenbildebene 32, die hier auch die Eintritts- bzw. Austrittspupille der zweiten Teiloptik 24 ist.

Die Linsenflächen mit dem Bezugzeichen 5, 15 und 106 wurden asphärisch geschliffen, deren Asphärenparameter in üblicher Nomenklatur detailliert in Tabelle **II** angegeben sind. Die Asphärenparameter K, $A_n$ definieren dabei die Funktion z, die Raumrichtung der optischen Achse, bezüglich der orthogonalen carthesischen Koordinaten x und y durch

$$Z = \frac{H^2}{R\left(1 + \sqrt{1 - (1 + K)\cdot\left(\frac{H^2}{R^2}\right)}\right)} + A_3 H^3 + A_4 H^4 + \dots$$

mit $H = \sqrt{x^2 + y^2}$

Aufgrund der vorgegebenen Asphärizität wird möglichst viel Licht durch die Teiloptiken 22, 24 und 26 übertragen. Insbesondere ist dies in Fig. 3 auch bei der Linsenfläche 106 zu erkennen, bei der eine Krümmung zwar im wesentlichen zum Mischstab 46 hin erfolgt, wobei aber auch die Ränder der Linsenfläche die Ausgangsfläche der Mischstabs 46 etwas umgreifen. Aufgrund dieser Ausbildung wird nahezu das gesamte Licht des Mischstabs 46 von der asphärischen Linse mit den Flächen 105 und 106 gesammelt und weitergeführt.

Die Abmessungen des Prismas 36, sowie dessen Orientierung zur Fläche 9 sind außerdem noch einmal in der Tabelle III angegeben.

Der Einsatz dieses Ausführungsbeispiel zur Abbildung von DMD-Matrixen hat sich insbesondere für die Darstellung von Videobildern mit Bildschirmdiagonalen größer als 2 m als vorteilhaft erwiesen. Wie auch aus den Abmessungen der Tabelle I (Spalte D) hervorgeht, ist die Optik sehr klein dimensioniert. Da auch die Elektronik mittels Miniaturisierung entsprechend klein gehalten werden kann, entsteht so ein Gerät, das bequem in einer Aktentasche mitgeführt werden kann. Ein derartiges Gerät eignet sich somit besonders für die Videovorführung auf Messen, aber auch für Kleinkünstler, sowie Handelsvertreter, die einem größeren oder kleineren Publikum auch eine Präsentation über Video darbringen möchten.

**Tabelle I**

| Flächennummer | Krümmungsradius (mm) | zwischen den Flächen | D (mm) | N | ν |
|---|---|---|---|---|---|
| 1 | -450,10 | 1-2 | 2,50 | 1,6940 | 54,48 |
| 2 | 24,55 | 2 - 3 | 7,74 | 1,0000 | |
| 3 | -191,32 | 3 - 4 | 11,43 | 1,8126 | 25,24 |
| 4 | -49,62 | 4 - 5 | 18,71 | 1,0000 | |
| 5 | -228,80 | 5 - 6 | 7,48 | 1,5275 | 56,26 |
| 6 | -29,81 | 6 - 7 | 3,59 | 1,0000 | |
| 7 | 21,95 | 7 - 8 | 10,82 | 1,7923 | 47,23 |
| 8 | -58,50 | 8 - 9 | 3,89 | 1,8126 | 25,24 |
| 9 | 14,44 | 9 - 10 | 26,67 | 1,0000 | |
| 10 | 103,72 | 10 - 11 | 7,00 | 1,7923 | 47,23 |
| 11 | -45,14 | 11 - 12 | 1,13 | 1,0000 | |
| 12 | 60,17 | 12 - 13 | 6,60 | 1,7923 | 47,23 |
| 13 | -290,53 | 13 - 14 | 2,20 | 1,0000 | |
| 14 | -58,22 | 14 - 15 | 3,00 | 1,5275 | 56,26 |
| 15 | 433,32 | 15 - Prisma | 3,19 | 1,0000 | |
| Prisma | | | | 1,5187 | 63,96 |
| 101 | 39,96 | 101 - 102 | 8,22 | 1,7923 | 47,23 |
| 102 | -56,49 | 102 - 103 | 0,10 | 1,0000 | |
| 103 | 20,64 | 103 - 104 | 5,94 | 1,7923 | 47,23 |
| 104 | 37,95 | 104 - 105 | 7,24 | 1,0000 | |

(fortgesetzt)

| | | | | | |
|---|---|---|---|---|---|
| Prisma | | | | 1,5187 | 63,96 |
| 105 | 23,53 | 105 - 106 | 7,00 | 1,6406 | 35,09 |
| 106 | -22,73 | | 2,08 | 1,0000 | |

**Tabelle II**

Asphärenparameter

| Fläche | K | $A_4$ | $A_6$ | $A_8$ | $A_{10}$ |
|---|---|---|---|---|---|
| 5 | $2{,}764 \cdot 10^{-3}$ | $-3{,}597 \cdot 10^{-6}$ | $5{,}025 \cdot 10^{-9}$ | $-1{,}582 \cdot 10^{-11}$ | $1{.}177 \cdot 10^{-14}$ |
| 15 | $6{,}860 \cdot 10^{-3}$ | $1{,}177 \cdot 10^{-3}$ | $-2{.}513 \cdot 10^{-8}$ | $-1{,}424 \cdot 10^{-11}$ | |
| 106 | $-1{,}110 \cdot 10^{-5}$ | $1{,}131 \cdot 10^{-4}$ | $1{,}798 \cdot 10^{-6}$ | $9{,}760 \cdot 10^{-11}$ | $-3{,}141 \cdot 10^{-13}$ |

Lage der optisch wirksamen Prismenflächen relativ zu Fläche 9

**Tabelle III**

| Lage horizontal | Lage vertikal | Drehwinkel |
|---|---|---|
| 2,62 | -9,79 | 348,25 |
| -2,77 | -10,91 | 281,75 |
| -0,93 | -19,72 | 102,24 |

## Patentansprüche

1. Anordnung, bei der von einer Lichtquelle (46) aus Licht mittels einer Beleuchtungsoptik (28, 22) auf ein reflektierendes, rechteckiges bilderzeugendes Element (25) gerichtet wird, mit dem ein Bild erzeugt wird, das mittels einer Projektionsoptik, die aus einer ersten und zweiten Teiloptik (22, 24) gebildet ist, deren optische Achsen eine gemeinsame Hauptachse (20) bilden, auf einen Bildschirm projiziert wird, wobei die Beleuchtungsoptik (28, 22) die zweite Teiloptik (24) und eine dritte Teiloptik (28) umfasst und das von der dritten Teiloptik (28) kommende und in die zweite Teiloptik (24) einfallende Licht zur Hauptachse (20) einen Winkel (α) einschließt, bei dem die dritte Teiloptik (28) außerhalb eines Bereiches liegt, der von dem vom bilderzeugenden Element (25) reflektierten Licht von der zweiten (24) zur ersten Teiloptik (22) durchlaufen wird, **dadurch gekennzeichnet, dass** ein *Mittel* zur Erzeugung eines rechteckigen Strahlprofils des in die dritte Teiloptik (28) einfallenden Lichtbündels vorgesehen ist, wobei das Seitenverhältnis des rechtekkigen Strahlprofils dem Seitenverhältnis des bilderzeugenden Elementes (25) angepasst ist.

2. Anordnung nach Anspruch 1, **dadurch gekennzeichnet, dass** eine optische Achse (29) der dritten Teiloptik (28) mit der Hauptachse (20) der zweiten Teiloptik einen Winkel kleiner gleich 90 einschließt und dass eine Einrichtung zum Umlenken des Lichtbündels, insbesondere ein Spiegel (30) oder Prisma (36) vorgesehen ist, mit dem das von der dritten Teiloptik (28) ausgehende Licht in die zweite Teiloptik (24) eingeleitet ist.

3. Anordnung nach Anspruch 2, **dadurch gekennzeichnet, dass** eine Pupillenfläche der Projektionsoptik zwischen erster und zweiter Teiloptik (22, 24) vorgesehen ist und die Einrichtung zum Umlenken von dieser Pupillenfläche nicht mehr als der halbe Pupillendurchmesser beabstandet ist.

4. Anordnung nach Anspruch 1 bis 3, **dadurch gekennzeichnet, dass** die zweite Teiloptik (28) fokussierend ausgebildet ist.

5. Anordnung nach Anspruch 1 bis 4, **dadurch gekennzeichnet, dass** die zweite Teiloptik (28) auf der Seite des bilderzeugenden Elementes (25) eine Apertur von größer 0,3 und insbesondere 0,5 aufweist.

6. Anordnung nach einem der Ansprüche 1 bis 5, **dadurch gekennzeichnet, dass** die dritte Teiloptik (28) für einen Beleuchtungswinkel θ auf dem bilderzeugenden Element (25) hinter der zweiten Teiloptik mit sln θ kleiner als 0,3 und insbesondere kleiner 0,2 ausgelegt Ist.

**7.** Anordnung nach einem der Ansprüche 1 bis 6, **dadurch gekennzeichnet, dass** das bilderzeugende Element als Kippspiegelmatrix (34) oder als reflektierendes LCD ausgebildet ist.

**8.** Anordnung nach einem der Ansprüche 1 bis 7, **dadurch gekennzeichnet, dass** das Mittel zur Erzeugung eines rechteckigen Strahlprofils vor der dritten Teiloptik vorgesehen ist.

**9.** Anordnung nach einem der Ansprüche 1 bis 7 **dadurch gekennzeichnet, dass** das Mittel zur Erzeugung eines rechteckigen Strahlprofils hinter der dritten Teiloptik vorgesehen ist.

**10.** Anordnung nach einem der Ansprüche 1 bis 9, **dadurch gekennzeichnet, dass** das Mittel zur Erzeugung eines rechteckigen Strahlprofils ein Mischstab (46) ist.

**11.** Anordnung nach Anspruch 10, **dadurch gekennzeichnet, dass** zur Darstellung von Farbbildern das bildgebende Element als eine einzige Kippspiegelmatrix (34) ausgebildet sowie ein Farbrad (40) vorgesehen ist, wobei das Farbrad (40) als eine in Sektoren mit Filtern unterschiedlicher Farben unterteilte, die Eingangsfläche und/oder Ausgangsfläche des Mischstabes (46) abdeckende Mantelfläche eines Zylinders gestaltet ist.

## Claims

**1.** An arrangement with which light is directed from a light source (46) by means of illumination optics (28, 22) onto a reflective, rectangular, image-generating element (25) with which an image is generated which, by means of projection optics which are formed by first and second part-optics (22, 24), the optical axes of which form a common main axis (20), is projected onto a screen, the illumination optics (28, 22) comprising the second part optics (24) and third part optics (28) and the light coming from the third part optics (28) and penetrating the second part optics (24) forming an angle ($\alpha$) with the main axis (20) with which the third part optics (28) lie outside of a region which is passed through by the light reflected by the image-generating element (25) from the second (24) to the first part optics (22), **characterised in that** means for generating a rectangular beam profile of the light beam penetrating the third part optics (28) are provided, the aspect ratio of the rectangular beam profile being adapted to the aspect ratio of the image-generating element (25).

**2.** The arrangement according to Claim 1, **characterised in that** an optical axis (29) of the third part optics (28) forms an angle smaller than equals 90° with the main axis (20) of the second part optics, and that a device for deflecting the light beam, in particular a mirror (30) or prism (36) is provided with which the light passing out of the third part optics (28) is conveyed into the second part optics (24).

**3.** The arrangement according to Claim 2, **characterised in that** a pupil surface of the projection optics is provided between the first and second part optics (22, 24) and the device for deflecting from this pupil surface is no further away than half the pupil diameter.

**4.** The arrangement according to Claims 1 to 3, **characterised in that** the second part optics (28) are designed to be focussing.

**5.** The arrangement according to Claims 1 to 4, **characterised in that** the second part optics (28) have on the side of the image-generating element (25) an aperture of greater than 0.3 and in particular 0.5.

**6.** The arrangement according to any of Claims 1 to 5, **characterised in that** the third part optics (28) are designed for an illumination angle $\theta$ on the image-generating element (25) behind the second part optics with sin $\theta$ less than 0.3 and in particular less than 0.2.

**7.** The arrangement according to any of Claims 1 to 6, **characterised in that** the image-generating element is designed as a tilting mirror matrix (34) or a reflective LCD.

**8.** The arrangement according to any of Claims 1 to 7, **characterised in that** the means for generating a rectangular beam profile are provided in front of the third part optics.

**9.** The arrangement according to any of Claims 1 to 7, **characterised in that** the means for generating a rectangular beam profile are provided behind the third part optics.

**10.** The arrangement according to any of Claims 1 to 9, **characterised in that** the means for generating a rectangular beam profile are a mixing rod (46).

**11.** The arrangement according to Claim 10, **characterised in that** in order to display colour images the image-producing element is designed as a single tilting mirror matrix (34) and a colour wheel (40) is provided, the colour wheel (40) being in the form of an outer surface of a cylinder divided into sectors with filters of different colours covering the input surface and/or the output surface of the mixing rod (46).

## Revendications

**1.** Dispositif dans lequel une lumière est dirigée au moyen d'un dispositif optique d'éclairage (28, 22) à partir d'une source lumineuse (46) sur un élément (25) de formation d'images rectangulaire réfléchissant qui permet de produire une image qui est projetée sur un écran au moyen d'un système optique de projection constitué par un premier dispositif optique partiel (22) et un deuxième dispositif optique partiel (24) dont les axes optiques forment un axe principal commun (20), le dispositif optique d'éclairage (28, 22) comprenant le deuxième dispositif optique partiel (24) et un troisième dispositif optique partiel (28) et la lumière provenant du troisième dispositif optique partiel (28) et arrivant dans le deuxième dispositif optique partiel (24) formant un angle ($\alpha$) par rapport à l'axe principal (20), le troisième dispositif optique partiel (28) étant situé à l'extérieur d'une zone parcourue par la lumière réfléchie par l'élément de formation d'image (25), du deuxième dispositif optique partiel (24) vers le premier dispositif optique partiel (22), **caractérisé en ce qu'**
il est prévu un moyen destiné à produire un profil rectangulaire du faisceau lumineux arrivant dans le troisième dispositif optique partiel (28), le rapport latéral du profil rectangulaire étant accordé au rapport latéral de l'élément de formation d'image (25).

**2.** Dispositif selon la revendication 1, **caractérisé en ce qu'**un axe optique (29) du troisième dispositif optique partiel (28) forme un angle inférieur ou égal à 90° avec l'axe principal (20) du deuxième dispositif optique partiel et **en ce qu'**il est prévu un dispositif de déviation du faisceau lumineux, notamment un miroir (30) ou un prisme (36) permettant d'introduire dans le deuxième dispositif optique partiel (24) la lumière provenant du troisième dispositif optique partiel (28).

**3.** Dispositif selon la revendication 2, **caractérisé en ce qu'**une surface pupillaire du système optique de projection est prévue entre le premier et le deuxième dispositif optique partiel (22, 24) et le dispositif de déviation se trouve à une distance de cette surface pupillaire qui correspond au maximum à la moitié du diamètre de la pupille.

**4.** Dispositif selon la revendication 1 à 3, **caractérisé en ce que** le deuxième dispositif optique partiel (28) est conçu pour focaliser.

**5.** Dispositif selon la revendication 1 à 4, **caractérisé en ce que** le deuxième dispositif optique partiel (28) présente, du côté de l'élément de formation d'image (25), une ouverture supérieure à 0,3 et notamment de 0,5.

**6.** Dispositif selon l'une des revendications 1 à 5, **caractérisé en ce que** le troisième dispositif optique partiel (28) est conçu pour un angle d'éclairage θ sur l'élément de formation d'image (25) derrière le deuxième dispositif optique partiel avec sin θ inférieur à 0,3 et notamment inférieur à 0,2.

**7.** Dispositif selon l'une des revendications 1 à 6, **caractérisé en ce que** l'élément de formation d'image a la configuration d'une matrice de miroirs basculants (34) ou d'un écran LCD réfléchissant.

**8.** Dispositif selon l'une des revendications 1 à 7, **caractérisé en ce que** le moyen destiné à produire un profil rectangulaire est prévu en amont du troisième dispositif optique partiel.

**9.** Dispositif selon l'une des revendications 1 à 7, **caractérisé en ce que** le moyen destiné à produire un profil rectangulaire est prévu en arrière du troisième dispositif optique partiel.

**10.** Dispositif selon l'une des revendications 1 à 9, **caractérisé en ce que** le moyen destiné à produire un profil rectangulaire est un mélangeur optique (46).

**11.** Dispositif selon la revendication 10, **caractérisé en ce que**, pour permettre la représentation d'images en couleur, l'élément de formation d'image a la configuration d'une seule matrice de miroirs basculants (34) et il est prévu un disque coloré (40) qui est conçu sous la forme d'une surface d'enveloppe de cylindre divisée en secteurs par des filtres de différentes couleurs et qui couvre la surface d'entrée et/ou la surface de sortie du mélangeur optique (46).

**Fig. 1**

# Fig. 2

Fig. 3